Europäisches Patentamt

European Patent Office

Office européen des brevets

(19)

(11) Publication number: **0 106 433**
**A2**

(12) **EUROPEAN PATENT APPLICATION**

(21) Application number: **83303524.9**

(22) Date of filing: **20.06.83**

(51) Int. Cl.³: **F 02 G 5/00**

(30) Priority: **22.06.82 GB 8218090**
**11.08.82 GB 8223088**

(43) Date of publication of application:
**25.04.84 Bulletin 84/17**

(84) Designated Contracting States:
**AT BE CH DE FR IT LI LU NL SE**

(71) Applicant: **Rowe, Pauline Elsie**
**26 Chancellors Close**
**Edgbaston Birmingham B15(GB)**

(72) Inventor: **Rowe, Ivor Michael Frederick**

**Deceased(GB)**

(72) Inventor: **Rowe, Pauline E.**
**26 Chancellors Close Edgbaston**
**Birmingham B15(GB)**

(74) Representative: **Spruce, George Philip et al,**
**George Fuery & Co. Whitehall Chambers 23 Colmore**
**Row**
**Birmingham B3 BL2(GB)**

(54) **Heat recovery engine.**

(57) Engine powered by extracting heat from a flow of internal combustion engine exhaust gases or other fluid medium has input and output flow control gates (10,14) defining a controlled section of a duct (12) along which said flow passes, the gates operating to pass the flow continuously along that section while maintaining a pressure differential therein. A pressure drop or rise in that section is continuously provided by cooling or injection of fluid to be vaporised so as to extract heat from the medium and this pressure differential drives a motor (18) and/or itself drives the gates to provide useful work, for example driving an electric generator (25).

Fig 1

EP 0 106 433 A2

1.

<u>ROGATE ENGINE</u>

This invention relates to heat engines utilising heat from a continuous flow (not necessarily at constant rate) of a fluid medium, typically a flow of heated gases. It may utilise a flow which is generated specifically for operation of the engine, e.g. by combustion of fuel so that the engine is a prime mover; but preferably the flow will be of otherwise wasted flue or exhaust gases derived from another heat powered or heat emitting appliance or process, for example the exhaust from an internal combustion engine, hereinafter referred to as "the parent source" or "parent engine".

The object of the invention is to provide a heat engine which is simple and reliable in construction and use, and effective in providing useful mechanical work from said continuous flow.

According to the invention a heat engine comprises a duct through which a continuous flow of a fluid medium is directed in use, a first control gate in the duct defining the upstream end of a controlled section of the duct, a second control gate in the duct defining the downstream end of said section, said gates operating to pass the flow substantially continuously through said section in use while sustaining a pressure differential therein, means for extracting heat from the medium passing through said section and thereby continuously creating a pressure differential therein, and fluid pressure operated motor means driven by said pressure differential.

Preferably the fluid medium enters said section

2.

as a flow of heated gas or gases.

The means for extracting heat may be a cooler operating to cause a pressure drop in said section or means for injecting water or other liquid into said section to be vapourised by heat from the medium so causing a pressure rise in said section.

A mechanical linkage may be provided to transmit drive from one gate to the other.

It is contemplated that one or both gates may operate as the fluid pressure operated motor means, being itself or themselves driven by the pressure differential between the controlled section of the duct and the remaining part or parts and/or said motor means may include a separate unit connected in or to said section.

If the kinetic energy of the medium passing through the control section is sufficient that energy may be used to drive the gate or gates on starting up the engine and/or during the continuous running thereof.

Each gate may be a rotary sliding vane pump/motor unit, as may be any separate fluid pressure operated motor unit, but other forms of gate may be employed for controlling and metering the inflow and outflow from the controlled section and these may incorporate rotary elements, for example a gear or roots pump/motor, or oscillating or reciprocating components such as a plunger pump/motor, shuttle valve or the like.

Some embodiments of the invention and variations or modifications thereof are now more particularly described with reference to the accompanying drawings,

3.

wherein:-

Figure 1 is a diagrammatic perspective view of a first embodiment of the invention;

Figure 2 is a like view of a second embodiment being a compound or two-stage engine; and

Figure 3 is a like view of a third embodiment of the invention being an independently fuelled prime moving engine.

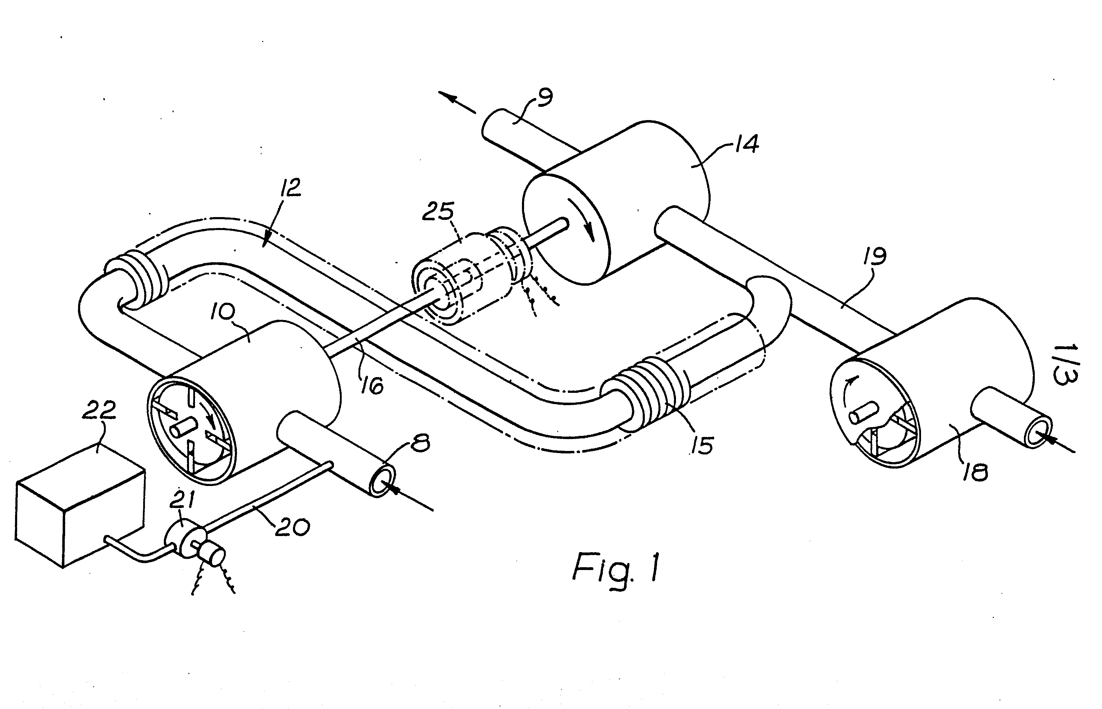

Referring firstly to Figure 1 a heat engine is shown which is auxiliary to and utilises waste heat from a parent source (not shown), typically the heat of the exhaust gases from a petrol, diesel or other internal combustion engine, for example on a vehicle.

The heat engine comprises an S-shaped duct 12 through which a continuous flow of the exhaust gases is directed in use entering at 8 and exiting at 9. A controlled central section of duct 12 is defined by a first control gate 10 in duct 12 at the upstream end of said section and a second control gate 14 in said duct at the downstream end thereof. Each said gate takes the form of a sliding vane pump/motor, the S-shaping of duct 12 enabling their rotors to be aligned on a common axis and directly mechanically coupled for rotation in a common direction by a shaft 16. In this arrangement both gate rotors will rotate at the same speed but they may be arranged to pass the through flow at different rates by appropriate selection of the performance charactistics of the respective gates, for example second gate 14 may pass a greater volume per revolution than first gate 10.

4.

The controlled section of duct 12 is provided with cooling means, for example cooling fins or a cooling jacket 15. Various forms of cooling may be employed depending on the operational environment.

In the arrangement shown in Figure 1 a separate fluid pressure operated motor 18 which in this example is a rotary sliding vane unit of identical construction to gates 10 and 14 is connected in a branch pipe 19 leading from atmosphere to a downstream part of the controlled section of duct 12 connecting therewith just upstream of the second gate 14.

This example also includes a facility for injecting cold water or other fluid into the hot gases immediately before they enter the controlled section, comprising an injection pipe 20 connected to duct 12 immediately upstream of the first gate 10 and operated by a metering pump 21 connected to a water storage tank 22.

In operation the injected water or other fluid will be vapourised by the hot gases and the first gate 10 will pass the resulting mixture of exhaust gases and steam or other vapour continuously in a controlled manner into the contolled section of duct 12. Cooling takes place in this section extracting heat from the gases accompanied by condensation of the steam or other fluid vapour which leads to a substantial pressure drop in said section causing a partial vacuum therein. The second gate 14 operates to maintain the through flow of medium along duct 12 so that the device operates continuously and the exhaust flow from the parent engine or appliance is not adversely

0106433

5.

affected. The pressure differential within said section draws air along branch 19 so driving the motor 18.

The water or other fluid injection referred to above is an optional feature and may be dispensed with in some applications.

The pressure or velocity of the exhaust gases entering the engine provide kinetic energy some of which is utilised to drive the input gate 10 and hence the output gate 14 and the relative capacities of the gates may be selected to assist the partial vacuum within the controlled section, i.e. the exhausting effect of the second gate 14 may be somewhat greater than the input of gate 10. If the kinetic energy of the inflow to the engine is not sufficient for this purpose or its utilisation would have adverse effects on the performance of the parent engine or source the gates may be driven by other means.

In a modification of the arrangement shown in Figure 1 the separate motor 18 and branch 19 are dispensed with and the two gates 10, 14 themselves are coupled or otherwise arranged to interact as the fluid pressure operated motor means. In one application of this form of the invention the rotors of the two gates 10, 14 will be driven at different speeds in their dual function of sustaining the pressure differential in the controlled section and as motors and, in the arrangement shown in Figure 1, their differential rotor speeds

6.

may be used to drive an electric generator indicated in broken lines at 25, the armature thereof being mounted on the rotor shaft of the first gate 10, and the field windings being mounted on the rotor shaft of the second gate 14. If the engine is fitted to a vehicle the electrical output from the generator can be applied for battery charging.

Further energy may be recovered by utilising the heat removed from the fluid medium by cooler 15 e.g. in powering or assisting to power further stages of a multistage heat engine as referred to hereafter.

An important incidental advantage of the invention when incorporated in the exhaust system of an internal combustion engine is that it has a very substantial silencing effect, thus a conventional silencer (which itself absorbs substantial energy for no useful purpose beyond suppressing noise) may usually be dispensed with. It is also possible that the cooling of the exhaust gases may have other environmental advantages, e.g. in reducing pollution.

The controlled section of duct 12 may take various forms, for example part of it may comprise a multi-tube radiator or heat exchanger for enhanced cooling. In some applications the cooling may be fan assisted.

It should be noted that although the input pressure or other kinetic energy of the exhaust or other continuous flow may be utilised in part to assist the operation of the control gates (particularly during starting up of the heat engine until the

7.

pressure differential is established in the controlled
section) this is not essential, the energy recovered
by the invention from the continuous fluid flow
is essentially the heat energy of the latter and
not its kinetic energy. Thus the invention is
distinct from various proposals for utilising
the exhaust flow of an internal combustion engine
such as turbo boosting devices driven by the exhaust
pressure for feeding fuel/air mixture to the parent
engine.

The substantially constant flow through the
engine progressively trapped in but being passed
through the controlled section by the gates may
be at variable speed (as will be the case with
the exhaust from a vehicle engine) but the operating
principles of the invention are unaffected, any
variation in output from the heat engine due to
this being acceptable for many applications.

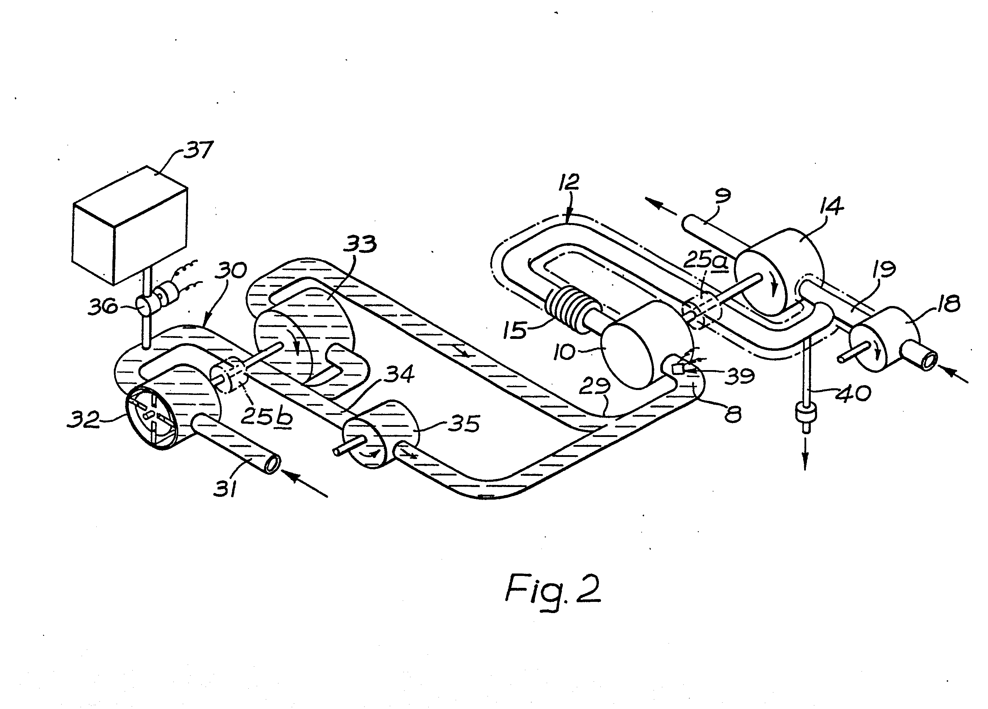

Referring to Figure 2 the second embodiment
of the invention is a two-stage engine utilising
high temperature waste gases or other fluid medium.
The second or downstream stage of the device is
substantially as described with reference to Figure
1 and the same reference numerals are used for
the equivalent components.

Upsteam of this is a first stage comprising
a second S-shaped duct 30 whose input end 31 receives
the flow of hot medium from the parent engine
or other source and whose downstream end 29 leads
directly to the input 8 of the second stage.
A controlled section of duct 30 is defined by
a third control gate 32 at the upstream end and
a fourth control gate 33 at the downstream end
similar in construction to the gates 10 and 14

8.

of the second section. A branch duct 34 leading from the controlled section connects with a fluid pressure powered motor 35 similar to motor 18 and is then connected back to the outlet 32 from duct 30 to form a closed loop leading into the second stage. In this arrangement water or other liquid is injected into an upsteam part of the controlled section by means of an injection pump 36 drawing the water or other fluid from a tank 37.

In operation the hot gases enter the first stage at 31 at pressure P1 and as this particular example of the engine has no starting facility this pressure has to be sufficient to overcome mechanical friction of the control gates 32, 33 of the first stage. Once the engine is running the effective input pressure P1 can be adjusted to a desired level by controlling the relationship between the flow rates of the two gates 32, 33. The output gate 33 is somewhat larger than the input gate 32 to give a mechanical advantage and the ducting, gates and motor of stage one are insulated against heat losses.

The injection of water or other fluid into the controlled section in stage one lowers the temperature of the hot medium and at the same time produces steam or vapour substantially increasing the pressure in the controlled section. This positive pressure differential is applied to drive the motor 35 with the exhaust from the latter passing on to the second stage to be further utilised along with the exhaust from duct 30 exiting from the gate 33.

These two flows combine at pressure P2 at the input 8 to the second stage. In starting,

9.

pressure P2 needs to be sufficient to overcome the mechanical friction in stage two and again the effective pressure P2 once the engine is running is adjusted by regulating the flow rates through the gates to give a mechanical advantage and drive gates 10 and 14 of the second stage as previously descibed. P2 is lowered by the input gate 10 of stage two having a higher flow rate than the output gate 14 of that stage and the mixture of steam or vapour and gases passes into stage two through gate 10. P2 is monitored by a sensor 39 at the input 8 to the second stage which may automatically control operation of pump 36.

In the controlled section of stage 2 the continuously flowing medium is cooled as described with reference to the first embodiment with condensation of the water or other vapour, the latter being recovered by a condensate drain 40 toward the downstream end of the controlled section, said condensate may possibly be recycled back to tank 37.

Differential operation of the two gates 32,33 may be used to drive a second generator 25b in the same way as generator 25a may be driven from gates 10,14.

It is to be understood that various compound or multistage arrangements may be used depending on the volume and heat of the continuous medium flow, for example two or more stages each comprising an arrangement as described with reference to Figure 1 may be arranged in series and/or in parallel with each other and a second stage may use a flow of medium used to cool the controlled section of a first stage.

10.

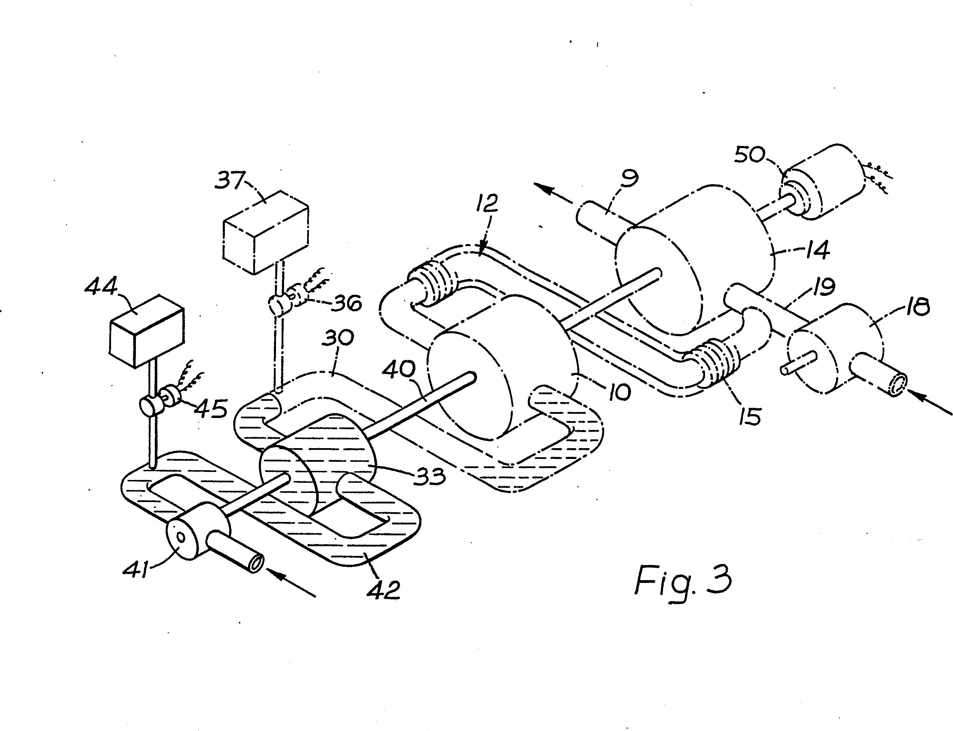

Figure 3 is a version of the invention operating as a prime mover i.e. fuelled independently of any other heat source. This arrangement comprises first and second stages (shown in broken lines and with the same reference numerals as in Figure 2) operating as described with refernece to the second embodiment though modified in that the input gate 10 of the second stage also serves as the output gate (equivalent to gate 33 of Figure 2) of the first stage and all three gates 32, 10 and 14 of these two stages are inter-related by their rotors being mounted on a common shaft 40 also the motors 35 of stage one in the second embodiment is not included.

Upstream of the first stage is a combustion or initial stage comprising an air metering gate 41 driven by an extension of shaft 40 for passing unheated air into an S-shaped combustion tube 42 which is thermally insulated and connected between gate 41 and gate 33. Liquid fuel drawn from a supply tank 44 by way of an injection pump 45 is injected into the combustion tube to mix with the air where combustion takes place providing heat and pressure. The hot gases pass through stages one and two as previously described to operate motor 18 and also provide mechanical output from shaft 40, for example by driving an electric generator 50 at the opposite end of the shaft to gate 41. The engine can be arranged to operate on a pulsating flow.

11.

<u>CLAIMS</u>

1. A heat engine comprising a duct (12) through which a continuous flow of a fluid medium is directed in use, a first control gate (10) in the duct defining the upstream end of a controlled section of the duct, a second control gate (14) in the duct defining the downstream end of said section, said gates operating to pass the flow substantially continuously through said section in use while sustaining a pressure differential therein, means (15) for extracting heat from the medium passing through said section and thereby continuously creating a pressure differential therein, and fluid pressure operated motor means (10,14,18) driven by said pressure differential.

2. An engine as in Claim 1 wherein the means for extracting heat is a cooler (15) operating to cause a pressure drop in said section.

3. An engine as in Claim 1 wherein the means for extracting heat is means (36) for injecting water or other liquid into said section to be vapourised by heat from the medium so causing a pressure rise in said section.

4. An engine as in Claim 1, 2 or 3 wherein a mechanical linkage (16) is provided to transmit drive from one gate to the other.

5. An engine as in any preceding claim wherein one or both gates (10,14) operates or operate as the fluid pressure operated motor means, being itself or themselves driven by said pressure differential.

12.

6. An engine as in any preceding claim wherein the fluid pressure operated motor means includes a motor unit (18) separate from the gates (10,14).

7. An engine as in any preceding claim wherein kinetic energy of the medium passing through the control section is applied to drive one or both gates (10,14) on starting the engine and/or during continuous running thereof.

8. An engine as in any preceding claim wherein the gates (10,14) are operatively driven at different speeds and/or operate at different flow rates.

9. An engine as in Claim 8 wherein the operation of the gates (10,14) augments the pressure differential created in the controlled section by said extraction of heat.

10. An engine as in any preceding claim including a plurality of stages each having a respective controlled section of duct (30,12) defined by gates (32,33;10,14).

11. An engine as in any preceding claim including means (21) for injecting water or other liquid into said flow at the input to the controlled section to be admitted as vapour with the medium into said section and to be condensed by cooling in the latter.

12.An engine as in any preceding claim combined with an internal combustion engine, the continuous flow of fluid medium being the exhaust gases from the latter.

13.

13. An engine as in any one of Claims 1 to 13 including a combustion stage upstream of the input to the controlled section having a combustion tube (42) in which combustion of fuel takes place in use to provide heated fluid medium.

Fig. 1

Fig.2

Fig. 3